# EUROPÄISCHE PATENTSCHRIFT

(11) **EP 1 364 186 B1**
(45) Veröffentlichungstag und Bekanntmachung des Hinweises auf die Patenterteilung: **07.05.2008**
(21) Anmeldenummer: 01984687.2
(22) Anmeldetag: 22.09.2001
(51) Int. Cl.: G01D 5/04, G01D 5/347

(54) **MULTITURN-CODEDREHGEBER**
MULTITURN ENCODER
CODEUR ROTATIF

(30) Priorität: 06.12.2000 DE 10060574
(43) Veröffentlichungstag der Anmeldung: 26.11.2003
(73) Patentinhaber: Dr. Johannes Heidenhain GmbH, 83292 Traunreut (DE)
(72) Erfinder: STRASSER, Erich, 83308 Trostberg (DE)
(86) Internationale Anmeldenummer: PCT/EP2001/010966
(87) Internationale Veröffentlichungsnummer: WO 2002/046702

(56) Entgegenhaltungen:
- WO-A-00/34746
- DE-A- 2 817 172
- DE-U- 9 116 926

## Beschreibung

In vielen Fällen ist es erforderlich, die Position einer Welle innerhalb einer Umdrehung sowie die Anzahl von Umdrehungen absolut zu erfassen. Zu diesem Zweck werden Multiturn-Codedrehgeber eingesetzt, wie beispielsweise in der WO 99/57522, der DE 28 17 172 C2 und der DE 195 34 995 A1 beschrieben.

Derartige Drehgeber sollen einerseits kompakt aufgebaut sein und andererseits eine hohe Messgenauigkeit aufweisen. Gemäß dem Drehgeber der DE 28 17 172 C2 sind zum platzsparenden Aufbau die über ein Untersetzungsgetriebe angetriebenen Codescheiben innerhalb des Umfangsbereiches der Eingangscodescheibe angeordnet. Die Detektorelemente zur Abtastung der Eingangs-Codescheibe und der dazu untersetzt angetriebenen Codescheiben sind auf unterschiedlichen Leiterplatten angeordnet.

Bei dem in der DE 195 34 995 A1 beschriebenen Multiturn-Codedrehgeber sind die Detektorelemente zur Abtastung einer Eingangs-Codescheibe und dazu untersetzt angetriebener Codescheiben auf einer Seite einer gemeinsamen Leiterplatte angeordnet. Um dies zu erreichen, sind die untersetzt angetriebenen Codescheiben räumlich neben der Eingangs-Codescheibe angeordnet, was die Baugröße erhöht und den Aufbau erschwert, da kein modularer Aufbau möglich ist.

Der Erfindung liegt die Aufgabe zugrunde, einen Multiturn-Codedrehgeber anzugeben, der kompakt aufgebaut ist, eine modulare Bauweise ermöglicht und eine hohe Winkelauflösung hat.

Diese Aufgabe wird von einer Anordnung mit den Merkmalen des Patentanspruchs 1 gelöst.

Die Vorteile der Erfindung bestehen darin, dass die Detektoreinrichtungen des Eingangs-Codeträgers und der untersetzt dazu angetriebenen Codeträger auf einer einzigen Oberfläche einer Leiterplatte in einem gemeinsamen Verfahrensschritt nach bekannten Kontaktierungsverfahren aufgebracht werden können.

Die gegenüberliegende Oberfläche der Leiterplatte steht für weitere Bauelemente zur Signalverarbeitung zur Verfügung und kann nach einem weiteren Verfahren bestückt werden. Darüber hinaus kann zumindest weitgehend der gesamte Umfang des Drehgebers für die Codierung des Eingangs-Codeträgers verwendet werden, wodurch eine maximale Winkelauflösung in Abhängigkeit des gesamten Umfangs des Drehgebers ermöglicht wird.

Vorteilhafte Ausgestaltungen der Erfindung sind in den abhängigen Patentansprüchen angegeben.

Ausführungsbeispiele der Erfindung sind in den Figuren dargestellt. Es zeigen
- Figur 1: den schematischen Aufbau eines Multiturn-Codedrehgebers im Querschnitt,
- Figur 2: eine perspektivische Ansicht des Multiturn-Codedrehgebers als Explosionsdarstellung,
- Figur 3: die Draufsicht auf einen magnetischen Codeträger des Multiturn-Teils,
- Figur 4: einen zweiten Multiturn-Codedrehgeber schematisch im Querschnitt und
- Figur 5: einen dritten Multiturn-Codedrehgeber schematisch im Querschnitt.

Der Multiturn-Codedrehgeber ist modular aufgebaut und besteht aus einem Trägerteil 1, einer Eingangswelle 2 mit einer daran befestigten Eingangs-Codescheibe 3, einer Leiterplatte 4 und einem Multiturn-Teil 5. Zur Erfassung der absoluten Position innerhalb einer Umdrehung der Eingangswelle 2 trägt diese eine Codierung 6, die von einer Lichtquelle 7 beleuchtet wird und von einer Detektoreinrichtung 8 abgetastet wird. Die Codierung 6 ist ein mehrspuriger Code, in der Regel ein Gray-Code, wobei die feinste Spur eine hochauflösende Inkrementalspur ist, die vorteilhafterweise möglichst weit außen am Umfang der Codescheibe 3 angeordnet ist, um möglichst viele Teilungsperioden über den Umfang anordnen zu können. Je mehr Teilungsperioden über den gesamten Umfang angeordnet sind, desto höher ist die zu erfassende Winkelauflösung des Drehgebers.

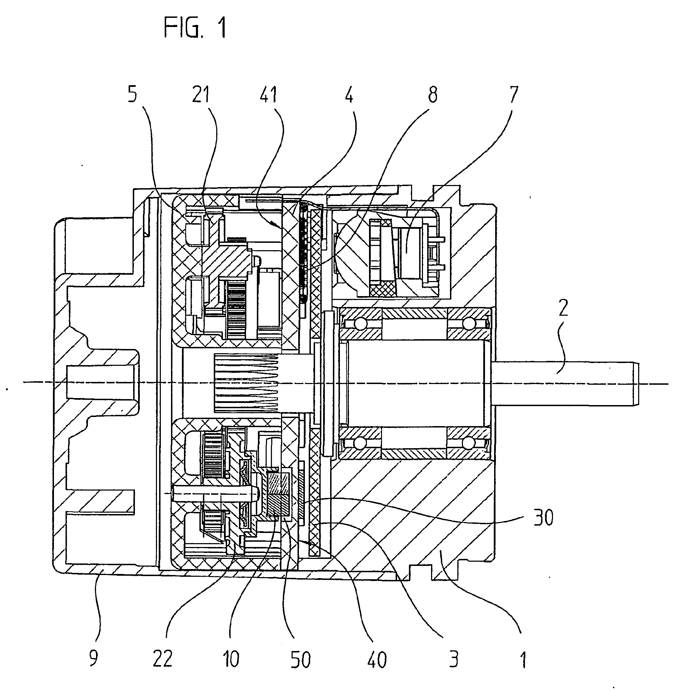

Die Eingangswelle 2 ist im Trägerkörper 1 drehbar gelagert und treibt untersetzt weitere Codeträger 10, 11, 12 an. Hierzu ist im Multiturn-Teil 5 ein Untersetzungsgetriebe 20 angeordnet, von dem in Figur 1 die Zahnräder 21 und 22 im Schnitt dargestellt sind. Die weiteren Codeträger 10, 11, 12 dienen zur Messung der Anzahl der Umdrehungen der Eingangswelle 2, wobei jede weitere Codescheibe 10, 11, 12 über das Untersetzungsgetriebe 20 von dem jeweils vorgeschalteten Codeträger 10, 11, 12 untersetzt angetrieben wird und zur Abtastung jedes Codeträgers 10, 11, 12 eine Detektoreinrichtung 30 vorgesehen ist, von denen in den Figuren nur eine zu sehen ist. Zum platzsparenden Aufbau sind die Codeträger 10, 11, 12 zumindest im Wesentlichen vollständig innerhalb des Umfangsbereiches der Eingangs-Codescheibe 3 angeordnet.

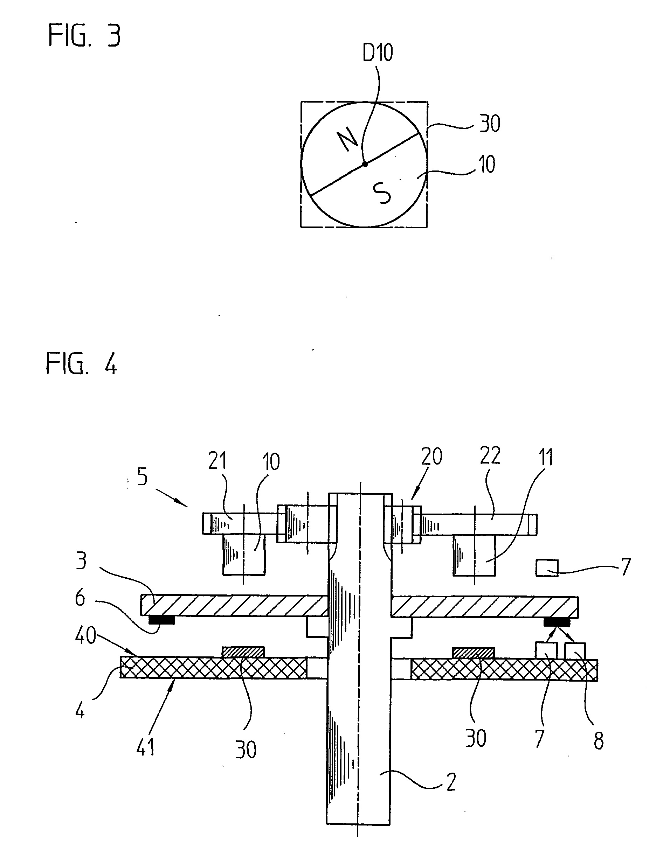

Die Drehachsen D10, D11, D12 der Codeträger 10, 11, 12 sind konzentrisch und parallel zur Eingangswelle 2 und die Codeträger 10, 11, 12 sind in einer gemeinsamen Ebene angeordnet. Jeder der Codeträger ist ein Magnetkörper 10, 11, 12 mit in Umfangsrichtung abwechselnd angeordneten Magnetpolen (Nord-Süd). Im einfachsten Fall sind die Magnetkörper 10, 11, 12 jeweils als Stabmagnete mit einem einzigen Nord- und Südpol ausgeführt. Ein derartiger Magnetkörper 10 ist in Figur 3 in Draufsicht dargestellt. Das Magnetfeld dieses Magnetkörpers 10 wird von der magnetfeldempfindlichen Detektoreinrichtung 30 erfasst, die abhängig von der Winkellage der Magnetpole N und S ein elektrisches Messsignal generiert und ausgibt. Dieses Messsignal ist vorzugsweise bereits ein von der Winkellage abhängiges digitales serielles Codewort. Hierzu ist jede der Detektoreinrichtungen 30 vorteilhafterweise ein Halbleitersubstrat mit einer darin integrierten räumlichen Anordnung von mehreren magnetfeldempfindlichen Sensorelementen in Form von Hall- oder magnetoresistiven Elementen und enthält eine Auswerteschaltung mit Verstärkern sowie Analog-Digitalwandlern, um am Ausgang der Detektoreinrichtungen 30 jeweils ein digitales Codewort mit mehreren Bits auszugeben, das die absolute Winkellage des zugeordneten Magnetkörpers 10, 11, 12 angibt.

Die Detektoreinrichtung 8 zur lichtelektrischen Abtastung der Eingangs-Codescheibe 3 und die Detektoreinrichtungen 30 zur Erfassung der Magnetfelder der Magnetkörper 10, 11, 12 sind Halbleiterbauelemente und auf einer gemeinsamen Oberfläche 40 bzw. Seite der Leiterplatte 4 aufgebracht und elektrisch kontaktiert. Diese Oberfläche 40 der Leiterplatte 4 ist der Eingangs-Codescheibe 3 direkt gegenüberliegend angeordnet. Der Multiturn-Teil 5 mit den Magnetkörpern 10, 11, 12 steht der anderen Oberfläche 41 der Leiterplatte 4 gegenüber. Die eine Oberfläche 40 der Leiterplatte 4 ist vorteilhafterweise durch ein erstes Verfahren bestückt und die gegenüberliegende Oberfläche 41 mit einem zweiten davon abweichenden Verfahren bestückt. Die lichtelektrische Detektoreinrichtung 8 und die magnetfeldempfindlichen Detektoreinrichtungen 30 sind mittels Drahtbonden auf der Oberfläche 40 kontaktiert und elektrische Bauelemente zur Signalverarbeitung der Abtastsignale der Detektoreinrichtungen 8, 30 sind SMD-Bauelemente und auf der Oberfläche 41 oberflächenmontiert.

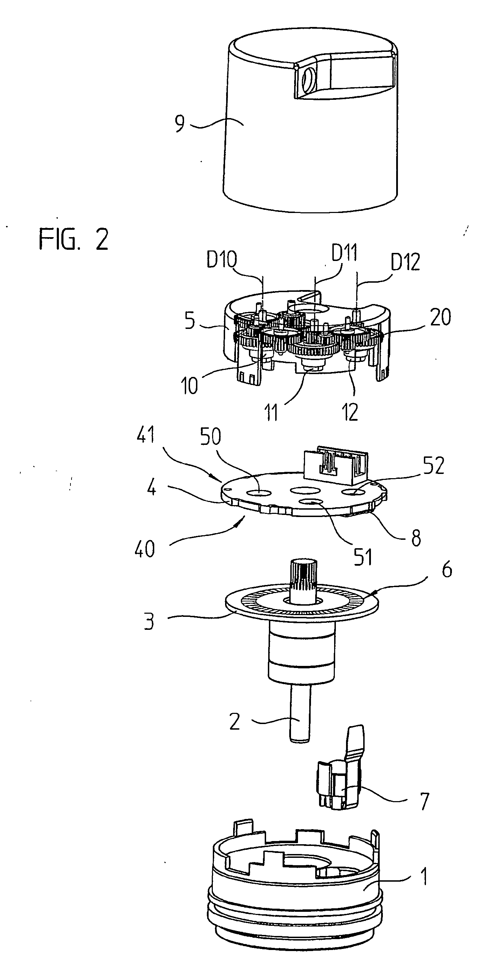

Die Leiterplatte 4 ist zumindest im Bereich, in dem sie die lichtelektrische Detektoreinrichtung 8 trägt und in dem sie am Trägerteil 1 befestigt ist, dick und somit stabil ausgebildet. In den Abtastbereichen zur Erfassung der Magnetfelder der Magnetkörper 10, 11, 12 in denen die magnetfeldempfindlichen Detektoreinrichtungen 30 angeordnet sind, ist die Leiterplatte 4 in ihrer Dicke verringert oder mit Durchbrüchen versehen. In Figur 1 ist einer dieser dünner ausgebildeten Bereiche in Form einer Sacklochbohrung 50 dargestellt und in Figur 2 ist jeweils eine Scklochbohrung 50, 51, 52 für einen der Magnetkörper 10, 11, 12 schematisch dargestellt. Diese Maßnahme hat den Vorteil, dass der Abstand zwischen den magnetfeldempfindlichen Detektoreinrichtungen 30 und den Magnetkörpern 10, 11, 12 annähernd oder sogar kleiner als die Dicke der Leiterplatte 4 gewählt werden kann, wodurch die Qualität, insbesondere die Amplituden der Abtastsignale erhöht wird.

Der Multiturn-Teil 5, die Codescheibe 3 und die Leiterplatte 4 sind durch eine gemeinsame Abdeckung 9 vor Umwelteinflüssen geschützt.

Im Ausführungsbeispiel gemäß der Figuren 1 und 2 wird die Codescheibe 3 im Durchlicht abgetastet, die Erfindung ist aber auch bei einer Codescheibe anwendbar, die im Auflicht abtastbar ist, indem auch die Lichtquelle 7 auf der Leiterplatte 4 auf der Seite 40 angeordnet und dort vorzugsweise auch kontaktiert ist.

Ein kompakter Aufbau ist auch erreichbar, wenn die erste Codescheibe 3 zwischen der Leiterplatte 4 und den Magnetkörpern 10, 11, 12 angeordnet ist. Die erste Codescheibe 3 kann wiederum von einer Detektoreinrichtung 8 im Durchlicht- oder Auflicht-Abtastverfahren abgetastet werden. Beide Alternativen sind in Figur 4 dargestellt, beim Auflicht-Abtastverfahren befindet sich die Lichtquelle 7 auf der Leiterplatte 4 neben der Detektoreinrichtung 8 und beim Durchlicht-Abtastverfahren befindet sich die Lichtquelle 7 auf der anderen Seite der Eingangs-Codescheibe 3. Alle Detektoreinrichtungen 8, 30 sind auf der Seite 40 der Leiterplatte 4 aufgebracht, die der Codescheibe 3 gegenübersteht. Das Magnetfeld der Magnetkörper 10, 11, 12 gelangt durch die Codescheibe 3 zu den magnetfeldempfindlichen Detektoreinrichtungen 30 auf der Leiterplatte 3, weshalb die Codescheibe 3 aus nichtferromagnetischem Material besteht.

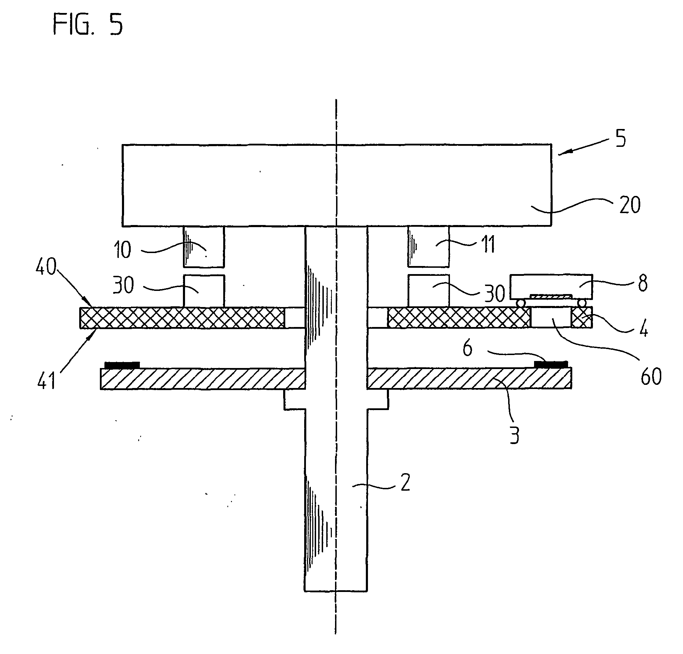

In Figur 5 ist ein drittes Ausführungsbeispiel schematisch dargestellt. Gleich wirkende Teile sind hier wiederum mit den gleichen Bezugszeichen wie in den vorhergehenden Beispielen bezeichnet. Die über die Eingangswelle 2 direkt angetriebene Eingangs-Codescheibe 3 ist gegenüber der Oberfläche 41 der Leiterplatte 4 angeordnet. Die andere Oberfläche 40 der Leiterplatte 4 trägt die Detektoreinrichtung 8 zur Abtastung der Codeträger 10, 11, 12 des Multiturn-Teils 5. Ist die Codierung 6 eine lichtelektrisch abtastbare Codierung, muss der Bereich der Leiterplatte 4 im Abtaststrahlengang transparent ausgebildet sein. Im Beispiel ist hierzu ein Durchbruch 60 vorgesehen. Die Detektoreinrichtung 8 ist hier vorzugsweise in flip-chip-Technik (chip-onglass) mit seiner lichtempfindlichen Seite nach unten auf Leiterbahnen der Leiterplatte 4 elektrisch kontaktiert. Die Anordnung der hier nicht dargestellten Lichtquelle erfolgt wiederum in Abhängigkeit davon, ob die Codierung 6 im Durchlicht- oder im Auflicht-Abtastverfahren abgetastet wird. Ist die Codierung 6 eine magnetisch abtastbare Codierung, ist der Bereich 60 der Leiterplatte 4 nicht ferromagnetisch. Vorzugsweise ist aber auch hier ein Durchbruch vorgesehen.

## Patentansprüche

1. Multiturn-Codedrehgeber mit
- einem ersten Codeträger (3), der mit einer Eingangswelle (2) verbunden ist und zur Erfassung der Winkellage der Eingangswelle (2) von einer Detektoreinrichtung (8) abtastbar ist;
- mehreren weiteren Codeträgern (10, 11, 12) zur Messung der Anzahl der Umdrehungen der Eingangswelle (2), wobei jeder weiteren Codeträger (10, 11, 12) über ein Untersetzungsgetriebe (20) untersetzt zu dem jeweils vorgeschalteten Codeträger (3, 10, 11) angetrieben ist und zur Abtastung jedes weiteren Codeträgers (10, 11, 12) eine Detektoreinrichtung (30) vorgesehen ist;
- die weiteren Codeträger (10, 11, 12) innerhalb des Umfangsbereiches des ersten Codeträgers (3) angeordnet sind, **dadurch gekennzeichnet, dass**
- die Detektoreinrichtung (8) des ersten Codeträgers (3) und die Detektoreinrichtungen (30) der weiteren Codeträger (10) auf einer gemeinsamen Seite (40) einer Leiterplatte (4) angeordnet sind.

2. Multiturn-Drehgeber nach Anspruch 1, **dadurch gekennzeichnet, dass** die Leiterplatte (4) räumlich zwischen dem ersten Codeträger (3) und den weiteren Codeträgern (10, 11, 12) angeordnet ist.

3. Multiturn-Drehgeber nach Anspruch 1, **dadurch gekennzeichnet, dass** der erste Codeträger (3) räumlich zwischen der Leiterplatte (4) und den weiteren Codeträgern (10, 11, 12) angeordnet ist.

4. Multiturn-Drehgeber nach einem der Ansprüche 1 bis 3, **dadurch gekennzeichnet, dass** die weiteren Codeträger (10, 11, 12) um parallel zur Eingangswelle (2) verlaufende Drehachsen (D10, D11, D12) drehbar gelagerte Magnetkörper (10, 11, 12) sind, die in Drehrichtung abwechselnd unterschiedlich magnetisiert sind und denen jeweils eine magnetfeldempfindliche Detektoreinrichtung (30) zugeordnet ist.

5. Multiturn-Drehgeber nach Anspruch 2 und 4, **dadurch gekennzeichnet, dass** der erste Codeträger (3) der Seite (40) der Leiterplatte (4) gegenüberliegend angeordnet ist, auf der die Detektoreinrichtungen (8, 30) angeordnet sind und die weiteren Codeträger (10, 11, 12) der gegenüberliegenden Seite (41) der Leiterplatte (4) zugewandt angeordnet sind.

6. Multiturn-Drehgeber nach Anspruch 5, **dadurch gekennzeichnet, dass** die Leiterplatte (4) im Bereich der magnetfeldempfindlichen Detektoreinrichtungen (30) Durchbrüche oder Sacklochbohrungen (50) aufweist.

7. Multiturn-Drehgeber nach Anspruch 6, **dadurch gekennzeichnet, dass** die Magnetkörper (10, 11, 12) in die Durchbrüche oder Sacklochbohrungen (50) hineinragen.

8. Multiturn-Drehgeber nach Anspruch 2, **dadurch gekennzeichnet, dass** die weiteren Codeträger (10, 11, 12) der Seite (40) der Leiterplatte (4) gegenüberliegend angeordnet sind, auf der die Detektoreinrichtungen (8, 30) angeordnet sind und der erste Codeträger (3) der anderen Seite (41) der Leiterplatte (4) zugewandt angeordnet ist.

9. Multiturn-Drehgeber nach Anspruch 8, **dadurch gekennzeichnet, dass** die Leiterplatte (4) im Bereich der Detektoreinrichtung (8) des ersten Codeträgers (3) einen Durchbruch (60) aufweist.

10. Multiturn-Drehgeber nach einem der vorhergehenden Ansprüche, **dadurch gekennzeichnet, dass** der erste Codeträger eine lichtelektrisch abtastbare Codescheibe (3) ist, der eine photoelektrische Detektoreinrichtung (8) auf der Leiterplatte (4) zugeordnet ist.

## Claims

1. Multiturn rotary encoder with
• a first code carrier (3), which is connected to an input shaft (2) and can be scanned by a detector device (8) to detect the angular position of the input shaft (2);
• a plurality of further code carriers (10, 11, 12) for measuring the number of rotations of the input shaft (2), wherein each further code carrier (10, 11, 12) is driven geared down by means of a reduction gear (20) relative to the respective code carrier (3, 10, 11) connected in series and a detector device (30) is provided for scanning each further code carrier (10, 11, 12);
• the further code carriers (10, 11, 12) are arranged inside the peripheral area of the first code carrier (3),
**characterised in that**
• the detector device (8) of the first code carrier (3) and the detector devices (30) of the further code carriers (10) are arranged on a common side (40) of a printed circuit board (4).

2. Multiturn rotary encoder according to claim 1, **characterised in that** the printed circuit board (4) is arranged spatially between the first code carrier (3) and the further code carriers (10, 11, 12).

3. Multiturn rotary encoder according to claim 1, **characterised in that** the first code carrier (3) is arranged spatially between the printed circuit board (4) and the further code carriers (10, 11, 12).

4. Multiturn rotary encoder according to one of claims 1 to 3, **characterised in that** the further code carriers (10, 11, 12) are magnetic bodies (10, 11, 12), which are disposed to be rotatable around rotational axes (D10, D 11, D 12) running parallel to the input shaft (2) and which are differently magnetised alternately in the direction of rotation and are respectively provided with an associated magnetic field-sensitive detector device (30).

5. Multiturn rotary encoder according to claim 2 and 4, **characterised in that** the first code carrier (3) is arranged to lie opposite the side (40) of the printed circuit board (4), on which the detector devices (8, 30) are arranged, and the further code carriers (10, 11, 12) are arranged to face the opposite side (41) of the printed circuit board (4).

6. Multiturn rotary encoder according to claim 5, **characterised in that** the printed circuit board (4) has perforations or blind holes (50) in the region of the magnetic field-sensitive detector devices (30).

7. Multiturn rotary encoder according to claim 6, **characterised in that** the magnetic bodies (10, 11, 12) project into the perforations or blind holes (50).

8. Multiturn rotary encoder according to claim 2, **characterised in that** the first code carriers (10, 11, 12) are arranged to lie opposite the side (40) of the printed circuit board (4), on which the detector devices (8, 30) are arranged, and the first code carrier (3) is arranged to face the other side (41) of the printed circuit board (4).

9. Multiturn rotary encoder according to claim 8, **characterised in that** the printed circuit board (4) has a perforation (60) in the region of the detector device (8) of the first code carrier (3).

10. Multiturn rotary encoder according to one of the preceding claims, **characterised in that** the first code carrier is a photoelectrically scannable code disk (3), which has an associated photoelectric detector device (8) on the printed circuit board (4).

## Revendications

1. Codeur rotatif dans lequel
- un premier support de codeur (3) est relié à un arbre d'entrée et, pour effectuer la saisie de la position angulaire de cet arbre d'entrée, ce support peut être exploré par un dispositif de détection (8),
- plusieurs autres supports de codeur (10, 11, 12) servent à mesurer le nombre des tours effectués par l'arbre d'entrée (2), chacun de ces autres supports étant entraîné par une transmission démultiplicatrice (20) créant une démultiplication par rapport au support de code (3, 10, 11) situé en amont et un dispositif de détection (30) est prévu pour chaque autre support de code (10, 11, 12),
- les autres supports de code (10, 11, 12) sont disposés à l'intérieur de la zone périphérique du premier support de code (3),
ce codeur rotatif étant **caractérisé en ce que** le dispositif de détection (8) du premier support de code (3) et les dispositifs de détection (30) des autres supports de code (10) sont disposés sur un même côté d'un circuit imprimé (4).

2. Codeur rotatif selon la revendication 1, **caractérisé en ce que** le circuit imprimé (4) est disposé dans l'espace entre le premier support de code (3) et les autres supports de code (10, 11, 12).

3. Codeur rotatif selon la revendication 1, **caractérisé en ce que** le premier support de code (3) est disposé dans l'espace entre le circuit imprimé (4) et les autres supports de code (10, 11, 12).

4. Codeur rotatif selon une des revendications 1 à 3, **caractérisé en ce que** les autres supports de code (10, 11, 12) sont des corps magnétiques montés en rotation autour d'axes de rotation (D 10, D11, D12) parallèles à l'arbre d'entrée (2), ils sont magnétisés en alternance, selon des sens de rotation différents et à chacun d'eux est associé un dispositif de détection (30) sensible au champ magnétique.

5. Codeur rotatif selon la revendication 2 et 4, **caractérisé en ce que** le premier support de code (3) est disposé en regard de la face (40) du circuit imprimé (4) sur laquelle sont disposés les dispositifs de détection (8, 30) tandis que les autres supports de code (10, 11, 12) sont disposés en regard de l'autre face (41) du circuit imprimé.

6. Codeur rotatif selon la revendication 5, **caractérisé en ce que** le circuit imprimé (4) présente des passages ou des trous borgnes (50) dans la zone des dispositifs de détection (30) sensibles au champ magnétique.

7. Codeur rotatif selon la revendication 6, **caractérisé en ce que** les corps magnétiques (10, 11, 12) pénètrent dans les passages ou les trous borgnes (50).

8. Codeur rotatif selon la revendication 2, **caractérisé en ce que** les autres supports de code (10, 11, 12) sont disposés en regard de la face (40) du circuit imprimé sur laquelle se trouvent les dispositifs de détection (8, 30) et le premier support de code (3) sont disposés en regard de l'autre face (41) du circuit imprimé.

9. Codeur rotatif selon la revendication 8, **caractérisé en ce que** le circuit imprimé (4) présente un passage (60) dans la zone du dispositif de détection (8) du premier support de code (3).

10. Codeur rotatif selon une des revendications précédentes, **caractérisé en ce que** le premier support de code est un disque de code (3) qui peut être exploré par la lumière électrique, et auquel est associé sur le circuit imprimé (4) un dispositif de détection photoélectrique (8).
